# EUROPÄISCHE PATENTSCHRIFT

(11) **EP 3 071 945 B1**
(45) Veröffentlichungstag und Bekanntmachung des Hinweises auf die Patenterteilung: **22.07.2020**
(21) Anmeldenummer: 14796140.3
(22) Anmeldetag: 12.11.2014
(51) Int. Cl.: G01N 15/06, F01N 11/00, F02D 41/14

(54) **VERFAHREN ZUM BETREIBEN EINES PARTIKELSENSORS**
METHOD FOR OPERATING A PARTICLE SENSOR
PROCÉDÉ D'ACTIONNEMENT D'UN CAPTEUR DE PARTICULES

(30) Priorität: 20.11.2013 DE 102013223630
(43) Veröffentlichungstag der Anmeldung: 28.09.2016
(73) Patentinhaber: Robert Bosch GmbH, 70442 Stuttgart (DE)
(72) Erfinder: KNUEBEL, Andreas, 70193 Stuttgart (DE); BAARS, Enno, 71229 Leonberg (DE); BESSEN, Michael, 70190 Stuttgart (DE)
(86) Internationale Anmeldenummer: PCT/EP2014/074368
(87) Internationale Veröffentlichungsnummer: WO 2015/074928

(56) Entgegenhaltungen:
- DE-A1-102007 014 761
- DE-A1-102008 031 648
- DE-A1-102009 003 091
- DE-A1-102012 008 462
- US-A1- 2011 047 978

## Beschreibung

### Stand der Technik

Die Erfindung betrifft ein Verfahren zum Betreiben eines Partikelsensors zur Bestimmung eines Partikelgehalts in einem Gasstrom nach dem Oberbegriff des Anspruchs 1.

Partikelsensoren (PM) werden heute beispielsweise zur Überwachung des Rußausstoßes von Brennkraftmaschinen und zur On Bord Diagnose (OBD), beispielsweise zur Funktionsüberwachung von Partikelfiltern, z.B. eines Dieselpartikelfilters (DPF) eingesetzt. Hierbei wird das Abgas stromabwärts vom Partikelfilter durch eine Doppelschutzrohrkonstruktion an dem Partikelsensor entlang geleitet. Dabei sind sammelnde, resistive Partikelsensoren bekannt, die eine Änderung der elektrischen Eigenschaften einer interdigitalen Elektrodenstruktur aufgrund von Partikelanlagerungen auswerten. Es können zwei oder mehrere Elektroden vorgesehen sein, die bevorzugt kammartig ineinander greifen und auf einer Keramikstruktur aufgebracht sind. Diese werden auch als Interdigitalelektroden (IDE) bezeichnet und bilden das eigentliche Sensorelement. Durch eine steigende Anzahl an dem Partikelsensor anlagernder Partikel werden die Elektroden kurzgeschlossen, was sich in einem mit steigender Partikelanlagerung abnehmendem elektrischen Widerstand, einer abnehmenden Impedanz oder in einer Veränderung einer mit dem Widerstand beziehungsweise der Impedanz zusammen hängenden Kenngröße wie einer Spannung und/ oder einem Strom auswirkt. Zur Auswertung wird im Allgemeinen ein Schwellwert, beispielsweise eines Messstroms zwischen den Elektroden, festgelegt und die Zeit bis zur Erreichung des Schwellwertes als Maß für die angelagerte Partikelmenge verwendet. Alternativ kann auch eine Signal-Änderungsgeschwindigkeit während der Partikelanlagerung ausgewertet werden.

Ein solcher resistiver Partikelsensor ist in der DE 101 33 384 A1 beschrieben. Der Partikelsensor ist aus zwei ineinander greifenden, kammartigen Elektroden aufgebaut, die zumindest teilweise von einer Fanghülse überdeckt sind. Lagern sich Partikel aus einem Gasstrom an dem Partikelsensor ab, so führt dies zu einer auswertbaren Änderung der Impedanz des Partikelsensors, aus der auf die Menge angelagerter Partikel und somit auf die Menge im Abgas mitgeführter Partikel geschlossen werden kann.

Ist der Partikelsensor voll beladen, werden die angelagerten Partikel in einer Regenerationsphase mit Hilfe eines in dem Partikelsensor integrierten Heizelements verbrannt. Dafür wird die Keramik des Sensorelements auf hohe Temperaturen, üblicherweise auf > 600° C, erhitzt. In dieser Regenerationsphase reagiert das Sensorelement empfindlich auf große lokale Temperaturänderungen bzw. auf einen Thermoschock, wie er durch auftreffendes Wasser oder Wassertropfen auftreten kann. Ein derartiger Thermoschock kann zu Rissen im Sensorelement führen. Deshalb wird vom Motorsteuergerät eine Sensorregeneration nur dann angefordert, wenn laut Wärmemengenberechnung im Motorsteuergerät kein Wasser mehr an der Sensoreinbauposition vorhanden sein kann.

Die Schrift DE 10 2009 028 319 A1 beschreibt u.a. ein Verfahren zum Betrieb eines Partikelsensors zur Bestimmung eines Partikelgehalts in einem Abgasstrom einer Brennkraftmaschine, wobei der Partikelsensor in bestimmten zeitlichen Abständen in Regenerationsphasen einer Regeneration unterworfen und dabei eine Rußbeladung am Partikelsensor entfernt wird. Die Regeneration wird dabei nach Abwarten einer Sensorfreigabe durchgeführt, wobei bei einem Kaltstart oder bei einem Warmstart der Brennkraftmaschine der Partikelsensor mit einem darin integrierten Heizelement einer Trocknung unterzogen wird. Diese Feuchte-Schutzheizung erfolgt mit zuvor applizierten festen Zeiten oder über ein Trocknungsmodell.

Durch starke Beaufschlagung der Abgasanlage mit Wasser von außen, z.B. während einer Watfahrt, oder bei Eindringen von Wasser in die Abgasanlage, kann es zu einer starken Abkühlung der Abgasanlage kommen. Diese Abkühlung kann je nach Abgasanlagenkonfiguration nicht vom Motorsteuergerät erkannt werden, aber zu einer Gefährdung durch Thermoschock am Sensorelement führen.

Um das Sensorelement bei Beginn eines Fahrzyklus zu trocknen, ist ein Schutzzustand während der Wartezeit auf ein Taupunktende (TPE) vorgesehen, bei dem die Sonde auf eine niedrige konstante Temperatur beheizt wird. Bei dieser Temperatur wird das Sensorelement zwar getrocknet, jedoch kann noch kein Thermoschock durch auftreffende Flüssigkeitstropfen auftreten.

Um zum Startpunkt einer Regeneration ein getrocknetes Sensorelement sicherzustellen, müssen folgende Bedingungen erfüllt sein:
- Sensorbetrieb in der Phase "Schutzheizen vor Taupunktende" für eine bestimmte Mindestzeit, typischerweise z.B. 80 s, und
- Integration der für die Taupunktende-Freigabe notwendige Wärmemenge im Motorsteuergerät.

Mit den bisher eingesetzten Verfahren besteht allerdings die Möglichkeit, dass eine Watfahrt während einer Sensorschutzheizphase zu einer Befeuchtung des Sensorelementes führt und die Feuchte aus dem Sensorelement bis zur einsetzenden Sensorregeneration nicht mehr aus dem Sensorelement ausgetrieben werden kann. Die zuvor genannten Bedingungen bieten dabei keinen ausreichenden Schutz, wenn das Sensorelement z.B. kurz vor Ende der Phase "Schutzheizen vor Taupunktende" im Rahmen einer Watfahrt mit flüssigem Wasser beaufschlagt wurde. Weder der Sensor noch das Motorsteuergerät würden diese Watfahrt erkennen. Unter Umständen könnte eine Sensorregeneration durchgeführt werden, ohne dass eine vollständige Durchtrocknung des Sensorelementes stattgefunden hat. Diese Sensorregeneration könnte zu einer Beschädigung des Sensorelementes führen.

Aus der DE 10 2010 002 979 A1 ist zwar ein Verfahren zur Erfassung mindestens einer Eigenschaft eines fluiden Mediums bekannt, wobei ein Sensorelement mit mindestens einem Heizelement und mindestens einem Temperaturfühler verwendet wird, wobei in mindestens einem Tröpfchendetektionsschritt des Verfahrens das Sensorelement mittels des Heizelementes beheizt wird. Dabei ist vorgesehen, dass die Temperatur des Sensorelements mittels des Temperaturfühlers erfasst wird, wobei aus einem kurzfristigen Abfall der Temperatur, insbesondere einem Temperaturpeak, auf ein Auftreffen von Flüssigkeit aus dem fluiden Medium, insbesondere Tröpfchen, auf das Sensorelement geschlossen wird. In diese Schrift wird allerdings kein Ansatz beschrieben, dass aufgrund dieser Tröpfchenerkennung die Schutzheizung adaptiert wird, um ein durchgetrocknetes Sensorelement z.B. nach einer Watfahrt zu gewährleisten.

Weitere Verfahren und Vorrichtung zum Betreiben eines Partikelsensors sind bekannt aus der DE 10 2009 003 091 A1 und der DE 10 2012 008 462 A1. DE 10 2012 008 462 A1 offenbart die Präambel des Anspruchs 1.

Es ist daher Aufgabe der Erfindung, dass nur ein vollständig durchgetrocknetes Sensorelement regeneriert werden kann.

### Offenbarung der Erfindung

Die das Verfahren betreffende Aufgabe wird durch das Verfahren nach Anspruch 1 dadurch gelöst, dass während dieser Heizphase, welche als "Schutzheizen vor Taupunktende (TPE)" bekannt ist, vor der Regenerationsphase die Dauer dieser Heizphase verlängert wird, wenn für eine bestimmte Zeit eine Temperaturabweichung von einer bestimmten Temperaturbandbreite um einen Temperatursollwert detektiert wird. Damit kann erreicht werden, dass das Sensorelement immer vollständig durchgetrocknet ist, so dass eine Sensorregeneration bei hohen Temperaturen ohne Beschädigung infolge eines Thermoschocks des Sensorelementes durchgeführt werden kann.

Sind, wie dies eine bevorzugte Verfahrensvariante vorsieht, die Dauer der Temperaturabweichung und/ oder die Temperaturbandbreite (± ΔT) um den Temperatursollwert, z.B. typischerweise 200° C, vorgebbar, kann die Empfindlichkeit des Verfahrens an die jeweiligen eingesetzten Komponenten bzw. an die Anordnung der Komponenten angepasst werden.

Die Erfindung sieht vor, dass ein Timer für die Steuerung der Dauer der Heizphase vor der Regenerationsphase jeweils zurückgesetzt und/ oder neu gestartet wird, wenn eine Temperaturabweichung von der bestimmten Temperaturbandbreite um den Temperatursollwert detektiert wird. Damit kann eine Adaption der Dauer der Heizphase, abhängig von Umgebungsbedingungen, ermöglicht werden.

Es ist erfindungsgemäß vorgesehen, dass bei jedem Zurücksetzen und/ oder Neustarten des Timers ein Zähler inkrementiert wird und dass der Zählerstand zur Freigabe der Regenerationsphase ausgewertet wird. Damit können z.B. bestimmte Mindestzeiten bis zum Start der Regenerationsphase beeinflusst werden.

Eine bevorzugte Verfahrensvariante sieht vor, dass bei Erreichen einer applizierbaren Anzahl von Zurücksetz- und/ oder Neustart-Vorgängen die Sensorregenerationsphase für einen bestimmten Fahrzyklus gesperrt wird. Damit kann bei starker Abkühlung des Partikelsensors, z.B. infolge einer starken Wasserbenetzung, eine Beschädigung des Partikelsensors durch einen Thermoschock beim Einsetzen der Sensorregenerationsphase mit entsprechend hohen Temperaturen vermieden werden. Grundsätzlich ist eine Logik, die eine Mindestzeit im Zustand "Schutzheizen vor TPE" vorsieht, bereits in bestehenden Systemen zumindest teilweise implementiert. Der Aspekt der Überwachung einer Sensor-Wasserbenetzung in der Phase "Schutzheizen vor TPE" durch eine damit verbundene Sensorauskühlung ist bisher noch nicht betrachtet worden.

Eine Verfahrensvariante sieht dabei vor, dass anhand der Häufigkeit der Zurücksetz- und/ oder Neustart-Vorgänge des Timers eine starke Wasserbenetzung eines Abgasstrangs einer Brennkraftmaschine, insbesondere des darin verbauten Partikelsensors, detektiert wird. Damit kann z.B. eine Watfahrt erkannt werden. Im Zuge von Schutzmaßnahmen kann dann z.B. die Regeneration des Sensorelementes ausgesetzt werden, bis von einer vollständigen Trocknung des Sensorelementes ausgegangen werden kann. Zudem können bei Detektion einer Watfahrt auch entsprechende Schutzmaßnahmen für andere Komponenten der Abgasreinigungsanlage initiiert werden, um eine Beschädigung dieser zu vermeiden.

Eine bevorzugte Anwendung des Verfahrens und seiner Varianten, wie sie zuvor beschrieben wurden, sieht den Betrieb eines Partikelsensors im Rahmen einer On-Board-Diagnose des Partikelsensors, der im Abgasstrang einer als Diesel-Motor oder als Otto-Motor ausgeführten Brennkraftmaschine zur On-Board-Diagnose eines Partikelfilters angeordnet ist oder zur Messung von Ruß-Rohemissionen verwendet wird, vor. In dieser Anwendung kommt es insbesondere auf eine genaue und reproduzierbare Diagnose der Partikelbeladung des im Abgasstrang der Diesel-Brennkraftmaschine angeordneten Rußpartikelfilters (DPF) an. Zum Schutz des Partikelsensors und weiterer Komponenten der Abgasreinigungsanlage der Brennkraftmaschine kann das erfindungsgemäße Verfahren insbesondere bei Geländefahrzeugen, bei denen es häufig zu einer starken Abkühlung infolge einer starken Wasserbenetzung kommen kann, Vorteile bieten und eine Beschädigung der Komponenten der Abgasreinigungsanlage verhindern helfen.

Weiterhin wird eine nicht beanspruchte Steuer- und Auswerteeinheit offenbart, die Einrichtungen, wie mindestens einen neu initialisierbaren Timer, mindestens einen Zähler sowie ein oder mehrere Komparatoren zur Durchführung des zuvor beschriebenen Verfahrens und seinen aufgeführten Verfahrensvarianten aufweist. Üblicherweise sind diese Einrichtungen bereits in Steuer- und Auswerteeinheiten gemäß dem Stand der Technik vorhanden. Vorteilhaft ist hierbei, dass zur Durchführung des Verfahrens keine Hardwareänderung am Partikelsensor oder an der Steuer- und Auswerteeinheit vorgenommen werden muss. Diese zusätzliche Funktionalität kann ausschließlich durch eine Softwareergänzung realisiert werden. Die Steuer- und Auswerteeinheit kann dabei als eigenständige Einheit, welche z.B. sensornah am Partikelsensor oder als integraler Bestandteil einer übergeordneten Motorsteuerung ausgeführt sein.

Die Erfindung wird im Folgenden anhand eines in den Figuren dargestellten Ausführungsbeispiels näher erläutert. Es zeigen:
Figur 1 in einer schematischen Darstellung das technische Umfeld, in der das Verfahren angewendet werden kann und
Figur 2 schematisch einen Partikelsensor in einer Explosionsdarstellung.

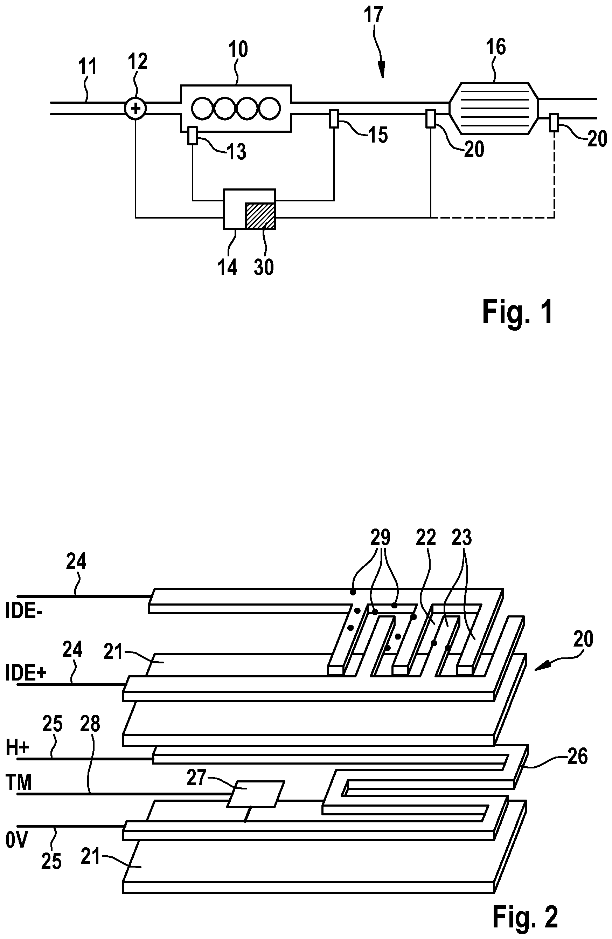

Figur 1 zeigt schematisch das technische Umfeld, in dem das erfindungsgemäße Verfahren angewendet werden kann. Eine Brennkraftmaschine 10, die als Dieselmotor ausgeführt sein kann, bekommt Verbrennungsluft über eine Luftzuführung 11 zugeführt. Dabei kann die Luftmenge der Verbrennungsluft mittels eines Luftmassenmessers 12 in der Luftzuführung 11 bestimmt werden. Die Luftmenge kann bei einer Korrektur einer Anlagerungswahrscheinlichkeit von im Abgas der Brennkraftmaschine 10 vorhandenen Partikeln verwendet werden. Das Abgas der Brennkraftmaschine 10 wird über einen Abgasstrang 17 abgeführt, in dem eine Abgasreinigungsanlage 16 angeordnet ist. Diese Abgasreinigungsanlage 16 kann als Diesel-Partikelfilter ausgeführt sein. Weiterhin sind im Abgasstrang 17 eine als Lambdasonde ausgeführte Abgassonde 15 und ein Partikelsensor 20 angeordnet, deren Signale einer Motorsteuerung 14 oder einer speziellen Steuer- und Auswerteeinheit 30 (Sensor Control Unit SCU) zugeführt werden, die Bestandteil der Motorsteuerung 14 oder als eigenständige Einheit, z.B. sensornah am Partikelsensor 20, ausgeführt sein kann. Die Motorsteuerung 14 ist weiterhin mit dem Luftmassenmesser 12 verbunden und bestimmt auf Basis der ihr zugeführten Daten eine Kraftstoffmenge, die über eine Kraftstoff-Dosierung 13 der Brennkraftmaschine 10 zugeführt werden kann.

Der Partikelsensor 20 kann dabei auch in Strömungsrichtung des Abgases hinter der Abgasreinigungsanlage 16 angeordnet sein, was Vorteile hinsichtlich einer Homogenisierung der Abgasströmung an dieser Stelle mit sich bringt und insbesondere beim Einsatz im Rahmen der On-Board-Diagnose der Fall ist. Mit den gezeigten Vorrichtungen ist eine Beobachtung des Partikelausstoßes der Brennkraftmaschine 10 und eine Prognose der Beladung der als Diesel-Partikelfilter (DPF) ausgebildeten Abgasreinigungsanlage 16 möglich.

Figur 2 zeigt in einer schematischen Darstellung einen Partikelsensor 20 entsprechend dem Stand der Technik in einer Explosionsdarstellung.

Auf Isolierträgerschichten 21 aus Keramiken, beispielsweise aus Aluminiumoxid, ist eine IDE-Messstruktur 22 in Form einer ersten Elektrode und einer zweiten Elektrode aufgebracht. Die Elektroden sind in Form zweier interdigitaler, ineinander greifender Kammelektroden ausgeführt und werden als IDE-Elektroden 23 bezeichnet und stellen das eigentliche Sensorelement dar. An den stirnseitigen Enden der IDE-Elektroden 23 sind die IDE-Anschlüsse 24 (IDE+ und IDE-) vorgesehen, über welche die IDE-Elektroden 23 zur Spannungsversorgung und zur Durchführung der Messung mit der Steuer- und Auswerteeinheit 30 (in Figur 2 nicht dargestellt) verbunden sind. Zusätzlich ist im gezeigten Beispiel zwischen den Isolierträgerschichten 21 ein Heizelement 26 integriert, welches über zusätzliche Heizelement-Anschlüsse 25 (H+, OV) mit der Steuer- und Auswerteeinheit 30 verbunden ist.

Zur Messung der Temperatur kann zusätzlich ein Temperatursensor 27 im Schichtaufbau des Partikelsensors 20 vorgesehen sein, wobei zusätzlich ein Temperatursensor-Anschluss 28 (TM) aus dem Partikelsensor 20 herausgeführt ist. Als Temperatursensor 27 können beispielswiese Widerstandsstrukturen aus Platin zum Einsatz kommen. Alternativ kann auch zumindestens ein Teil der Struktur des Heizelements 26 als Temperatursensor 27 genutzt werden.

Wird ein solcher Partikelsensor 20 in einem Rußpartikel 29 führenden Gasstrom, beispielsweise in einem Abgaskanal eines Dieselmotors oder einer Feuerungsanlage, betrieben, so lagern sich Rußpartikel 29 aus dem Gasstrom an dem Partikelsensor 20 ab. Diese besitzen eine gewisse elektrischen Leitfähigkeit. Dabei hängt die Ablagerungsrate der Rußpartikel 29 an den Partikelsensor 20 neben der Partikelkonzentration in dem Abgas unter anderem auch von der Spannung ab, welche an den IDE-Elektroden 23 anliegt. Durch die anliegende Spannung wird ein elektrisches Feld erzeugt, welches auf elektrisch geladene Rußpartikel 29 eine entsprechende Anziehung ausübt. Durch geeignete Wahl der an den IDE-Elektroden 23 anliegenden Spannung kann daher die Ablagerungsrate der Rußpartikel 29 beeinflusst werden.

In dem Ausführungsbeispiel sind die IDE-Elektroden 23 und die oberste Isolationsträgerschicht 21, auf der sich die IDE-Elektroden 23 befinden, mit einer Schutzschicht (gestrichelt dargestellt) überzogen. Diese optionale Schutzschicht schützt die IDE-Elektroden 23 bei den zumeist vorherrschenden hohen Betriebstemperaturen des Partikelsensors 20 vor Korrosion. Sie ist in dem vorliegenden Ausführungsbeispiel aus einem Material mit einer geringen Leitfähigkeit hergestellt, kann jedoch auch aus einem Isolator gefertigt sein.

Auf der Schutzschicht haben sich Rußpartikel 29 aus dem Gasstrom in Form einer Schicht abgelagert. Durch die gering leitfähige Schutzschicht bilden die Rußpartikel 29 einen leitfähigen Pfad zwischen den IDE-Elektroden 23, so dass sich, abhängig von der Menge der abgelagerten Rußpartikel 29, eine Widerstandsänderung zwischen den IDE-Elektroden 23 ergibt. Diese kann zum Beispiel gemessen werden, in dem eine konstante Spannung an die IDE-Anschlüsse 24 der IDE-Elektroden 23 angelegt und die Änderung des Stromes durch die angelagerten Rußpartikel 29 bestimmt wird. Ist die Schutzschicht isolierend aufgebaut, führen die abgelagerten Rußpartikel 29 zu einer Änderung der Impedanz des Partikelsensors 20, was durch eine entsprechende Messung, bevorzugt mit einer Wechselspannung, ausgewertet werden kann.

Ist der Partikelsensor 20 soweit mit einer Schicht aus Rußpartikeln 29 belegt, dass zusätzlich angelagerte Rußpartikel 29 zu keiner zusätzlichen Änderung des Widerstandes beziehungsweise der Impedanz des Partikelsensors 20 führen, so wird der Partikelsensor 20 innerhalb einer Regenerationsphase regeneriert. Dazu wird der Partikelsensor 20 mit Hilfe des Heizelements 26 so weit aufgeheizt, dass die anliegenden Rußpartikel 29 verbrennen. Dies geschieht üblicherweise bei Temperaturen > 600° C.

Vor einer Regeneration des Partikelsensors 20 wird für eine bestimmte Zeit ein Schutzheizen vor dem Taupunktende (TPE) durchgeführt, wie dies eingangs beschrieben ist. Erfindungsgemäß ist dabei vorgesehen, dass ein Timer für die Zeit in der Phase "Schutzheizen vor Taupunktende" zurückgesetzt wird, wenn die Sensortemperatur ein vorgebbares Temperaturfenster während des Schutzheizens für eine applizierbare Zeit verlässt.

Typischerweise kann das vorgebbare Temperaturfenster 200° C ± 15 K betragen. Eine Zeitdauer für die Phase "Schutzheizen vor Taupunktende" kann dabei typischerweise 80 s betragen, mit der zu Beginn dieser Phase der Timer initialisiert wird. Eine Benetzung des Sensorelementes mit Wasser in der Phase "Schutzheizen vor Taupunktende" führt zu einer größeren Temperaturabweichung, da der Heizregler für das Heizelement 26 nur mit einer applizierbaren Maximalheizleistung betrieben wird und somit nicht schnell genug das Wasser verdampft werden kann.

Solange sich das Sensorelement im Temperaturbereich von z.B. 200° C ± ΔT K befindet, wird der Timer im Sekundentakt dekrementiert bis die Phase "Schutzheizen vor Taupunktende" beendet ist und anschließend die Sensorregenerationsphase gestartet werden kann. Der Parameter ΔT ist dabei vorgebbar. Dabei wird davon ausgegangen, dass keine starke Benetzung und eine damit verbundenen Abkühlung stattgefunden hat und der Partikelsensor 20 nach dieser Schutzheizung bedenkenlos bei entsprechend hohen Temperaturen regeneriert werden kann.

Sobald das Sensorelement das vorgebbare Temperaturfenster für eine applizierbare Zeitdauer infolge einer starken Abkühlung verlässt, wird der Timer wieder zurückgesetzt und neu mit der vorgebbaren Zeitdauer für die Phase "Schutzheizen vor Taupunktende", hier z.B. 80 s, initialisiert, wobei jede Neuinitialisierung des Timers zu einer Inkrementierung eines Zählers "Neuinitialisierung Schutzheiz-Timer" führt. Bei Erreichen einer ebenfalls applizierbaren Anzahl von Neuinitialisierungen des Zählers wird eine Sensorregeneration in diesem Fahrzyklus gesperrt, da davon auszugehen ist, dass der Sensor infolge häufigen und/ oder massiven Wasserkontaktes während dieser Phase noch nicht hinreichend durchgetrocknet ist.

Die zuvor beschriebene Funktionalität ist bevorzugt in einem vorort-Steuergerät des Partikelsensors 20, d.h. in einer Steuer- und Auswerteeinheit 30 des Partikelsensors 20 als Softwaremodul implementiert. Diese kann aber auch integraler Bestandteil der übergeordneten Motorsteuerung 14 sein (vergl. Figur 1).

Damit kann erreicht werden, dass das Sensorelement immer vollständig durchgetrocknet ist, so dass eine Regeneration bei hohen Temperaturen ohne Beschädigung infolge eines Thermoschocks des Sensorelementes durchgeführt werden kann.

## Patentansprüche

1. Verfahren zum Betreiben eines Partikelsensors (20) zur Bestimmung eines Partikelgehalts in einem Gasstrom, umfassend die folgenden Schritte:
- Bereitstellen eines Partikelsensors, wobei der Partikelsensor (20) auf seiner Oberfläche eine Sensorstruktur zur Ermittlung einer Rußbeladung und mindestens ein, durch eine Isolationsschicht von der Sensorstruktur getrenntes Heizelement (26) aufweist, mit dem der Partikelsensor (20) in einer Regenerationsphase aufgeheizt und dabei eine Rußbeladung am Partikelsensor (20) entfernt werden kann, und mit dem zumindest zeitweise vor der Regenerationsphase eine Heizphase durchgeführt werden kann, und wobei der Partikelsensor einen im Partikelsensor integrierten Temperatursensor aufweist, und
- Durchführen einer Heizphase und einer Regenerationsphase, wobei die Heizphase vor der Regenerationsphase durchgeführt wird, wobei in dieser Heizphase eine im Vergleich zur Regenerationstemperatur deutlich niedrigere Temperatur eingeregelt wird, wobei kurzzeitige Temperaturabfälle infolge einer Wasserbenetzung mit dem Temperatursensor (27) detektierbar sind, **dadurch gekennzeichnet, dass** während dieser Heizphase vor der Regenerationsphase die Dauer dieser Heizphase verlängert wird, wenn für eine bestimmte Zeit eine Temperaturabweichung infolge der Wasserbenetzung von einer bestimmten Temperaturbandbreite um einen Temperatursollwert detektiert wird, und
- dass ein Timer für die Steuerung der Dauer der Heizphase vor der Regenerationsphase jeweils zurückgesetzt und/ oder neu gestartet wird, wenn eine Temperaturabweichung infolge der Wasserbenetzung von der bestimmten Temperaturbandbreite um den Temperatursollwert detektiert wird, und
- dass bei jedem Zurücksetzen und/ oder Neustarten des Timers ein Zähler inkrementiert wird und der Zählerstand zur Freigabe der Regenerationsphase ausgewertet wird.

2. Verfahren nach Anspruch 1, **dadurch gekennzeichnet, dass** die Dauer der Temperaturabweichung und/ oder die Temperaturbandbreite um den Temperatursollwert vorgebbar sind.

3. Verfahren nach Anspruch 1, **dadurch gekennzeichnet, dass** bei Erreichen einer applizierbaren Anzahl von Zurücksetz- und/ oder Neustart-Vorgängen die Regenerationsphase für einen bestimmten Fahrzyklus gesperrt wird.

4. Verfahren nach einem der Ansprüche 1 bis 3, **dadurch gekennzeichnet, dass** anhand der Häufigkeit der Zurücksetz- und/ oder Neustart-Vorgänge des Timers eine starke Wasserbenetzung eines Abgasstrangs (17) einer Brennkraftmaschine (10), insbesondere des darin verbauten Partikelsensors (20), detektiert wird.

5. Anwendung des Verfahrens nach einem der vorhergehenden Ansprüche im Rahmen einer On-Board-Diagnose des Partikelsensors (20), der im Abgasstrang (17) einer als Diesel-Motor oder als Otto-Motor ausgeführten Brennkraftmaschine (1) zur On-Board-Diagnose eines Partikelfilters angeordnet ist oder zur Messung von Ruß-Rohemissionen verwendet wird.

## Claims

1. Method for operating a particle sensor (20) for determining a particle content in a gas stream, comprising the following steps:
- providing a particle sensor, wherein the particle sensor (20) has, on its surface, a sensor structure for ascertaining a soot loading and at least one heating element (26) which is separated from the sensor structure by an insulation layer and by way of which the particle sensor (20) can be heated in a regeneration phase and in doing so a soot loading on the particle sensor (20) can be removed and by way of which a heating phase can be carried out at least temporarily before the regeneration phase, and wherein the particle sensor has a temperature sensor which is integrated in the particle sensor, and
- carrying out a heating phase and a regeneration phase, wherein the heating phase is carried out before the regeneration phase, wherein a temperature which is considerably lower than the regeneration temperature is adjusted in this heating phase, wherein brief temperature drops owing to wetting by water can be detected by way of the temperature sensor (27), **characterized in that**, during this heating phase before the regeneration phase, the duration of this heating phase can be extended if a temperature deviation owing to the wetting by water from a specific temperature bandwidth about a temperature setpoint value is detected for a specific time, and
- **in that** a timer for controlling the duration of the heating phase before the regeneration phase is respectively reset and/or restarted if a temperature deviation owing to the wetting by water from the specific temperature bandwidth about the temperature setpoint value is detected, and
- **in that** a counter is incremented each time the timer is reset and/or restarted and the counter reading is evaluated for enabling the regeneration phase.

2. Method according to Claim 1, **characterized in that** the duration of the temperature deviation and/or the temperature bandwidth about the temperature setpoint value can be prespecified.

3. Method according to Claim 1, **characterized in that** the regeneration phase for a specific driving cycle is blocked when an applicable number of resetting and/or restarting processes is reached.

4. Method according to one of Claims 1 to 3, **characterized in that** severe wetting by water of an exhaust tract (17) of an internal combustion engine (10), in particular the particle sensor (20) installed therein, is detected on the basis of the frequency of the resetting and/or restarting processes of the timer.

5. Use of the method according to one of the preceding claims within the scope of on-board diagnosis of the particle sensor (20) which is arranged in the exhaust tract (17) of an internal combustion engine (1), which is designed as a diesel engine or as a petrol engine, for on-board diagnosis of a particle filter and/or is used for measuring raw soot emissions.

## Revendications

1. Procédé d'exploitation d'un capteur de particules (20) pour déterminer une teneur en particules dans un courant de gaz, comprenant les étapes suivantes :
- la préparation d'un capteur de particules, le capteur de particules (20) comprenant sur sa surface une structure de capteur pour déterminer un chargement en noir de carbone et au moins un élément chauffant (26) séparé de la structure de capteur par une couche d'isolation, avec lequel le capteur de particules (20) peut être chauffé dans une phase de régénération et un chargement en noir de carbone sur le capteur de particules (20) peut ainsi être éliminé, et avec lequel une phase de chauffage peut être réalisée au moins temporairement avant la phase de régénération, et le capteur de particules comprenant un capteur de température intégré dans le capteur de particules, et
- la réalisation d'une phase de chauffage et d'une phase de régénération, la phase de chauffage étant réalisée avant la phase de régénération, une température sensiblement plus basse en comparaison de la température de régénération étant réglée dans cette phase de chauffage, de brèves chutes de température à la suite d'un mouillage par de l'eau étant détectables avec le capteur de température (27), **caractérisé en ce que**, pendant cette phase de chauffage avant la phase de régénération, la durée de cette phase de chauffage est prolongée lorsque, pendant une durée déterminée, un écart de température d'une plage de température déterminée d'une valeur prescrite de température est détecté à la suite d'un mouillage par de l'eau, et
- **en ce qu'**un minuteur pour le contrôle de la durée de la phase de chauffage avant la phase de régénération est à chaque fois réinitialisé et/ou redémarré lorsqu'un écart de température de la plage de température déterminée de la valeur prescrite de température est détecté à la suite du mouillage par de l'eau, et
- **en ce que** lors de chaque réinitialisation et/ou redémarrage du minuteur, un compteur est incrémenté et le niveau du compteur est évalué pour l'autorisation de la phase de régénération.

2. Procédé selon la revendication 1, **caractérisé en ce que** la durée de l'écart de température et/ou la plage de température autour de la valeur prescrite de température sont prédéterminables.

3. Procédé selon la revendication 1, **caractérisé en ce que** lorsqu'un nombre applicable de processus de réinitialisation et/ou redémarrage est atteint, la phase de régénération est bloquée pendant un cycle opérationnel déterminé.

4. Procédé selon l'une quelconque des revendications 1 à 3, **caractérisé en ce qu'**un mouillage important par de l'eau d'une section de gaz d'échappement (17) d'un moteur à combustion (10), notamment du capteur de particules (20) monté dans celui-ci, est détecté à partir de la fréquence des processus de réinitialisation et/ou redémarrage du minuteur.

5. Utilisation du procédé selon l'une quelconque des revendications précédentes dans le cadre d'un diagnostic embarqué du capteur de particules (20), qui est agencé dans la section de gaz d'échappement (17) d'un moteur à combustion (1) configuré sous la forme d'un moteur diesel ou d'un moteur à essence pour le diagnostic embarqué d'un filtre à particules ou qui est utilisé pour la mesure d'émissions brutes de noir de carbone.
